# EUROPEAN PATENT APPLICATION

(11) **EP 4 369 446 A1**
(43) Date of publication of application: **15.05.2024**
(21) Application number: 22837400.5
(22) Date of filing: 10.06.2022
(51) Int. Cl.: H01M 8/1213, H01M 4/86, H01M 4/88, H01M 8/12, H01M 8/124

(54) **SOLID OXIDE ELECTROCHEMICAL CELL AND METHOD FOR PRODUCING SAME**

(30) Priority: 07.07.2021 JP 2021112725
(71) Applicant: Connexx Systems Corporation, Kyoto 619-0294 (JP); Kyoto University, Kyoto-shi, Kyoto 606-8501 (JP)
(72) Inventor: IWAI, Hiroshi, Kyoto-shi, Kyoto 606-8501 (JP); KISHIMOTO, Masashi, Kyoto-shi, Kyoto 606-8501 (JP); TSUKAMOTO, Hisashi, Soraku-gun, Kyoto 619-0294 (JP)
(74) Representative: Cohausz & Florack
(86) International application number: PCT/JP2022/023458
(87) International publication number: WO 2023/281982

(57) **Abstract**

Provided are a solid oxide electrochemical cell with high power and a method for producing a solid oxide electrochemical cell by which a solid oxide electrochemical cell with high power can be fabricated in a manner that ensures both high productivity and high quality. A solid oxide electrochemical cell 10 includes a solid hydrogen electrode 12, a solid electrolyte membrane 14, and a solid oxygen electrode 16. The solid hydrogen electrode 12 includes, in a first surface 12f thereof, a plurality of first raised portions 12a raised in a direction toward the solid electrolyte membrane 14 and first intermediate portions 12b each located between two adjacent ones of the first raised portions 12a. The solid electrolyte membrane 14 includes second raised portions 14a stacked on the first raised portions 12a and second intermediate portions 14b stacked on the first intermediate portions 12b. The solid oxygen electrode 16 includes third raised portions 16a stacked on the second raised portions 14a and third intermediate portions 16b stacked on the second intermediate portions 14b. The first raised portions 12a have a pitch of 70 to 110 um. The second intermediate portions 14b are in contact with the third intermediate portions 16b without a gap therebetween.

## Description

### Technical Field

The present invention relates to a fuel electrode-supported solid oxide electrochemical cell including a solid hydrogen electrode on which a solid electrolyte membrane and a solid oxygen electrode are stacked in order, and particularly to a solid oxide electrochemical cell including a solid hydrogen electrode having a surface with protrusions and recesses.

### Background Art

Solid oxide electrochemical cells include solid oxide fuel cells (SOFCs) and solid oxide electrolyser cells (SOECs). Conventional solid oxide electrochemical cells, which have a structure in which a solid hydrogen electrode, a solid electrolyte membrane, and a solid oxygen electrode are simply stacked flat in order, are classified into three types, namely, solid electrolyte-supported cells, fuel electrode-supported cells, and air electrode-supported cells, depending on which layer is the thickest and mechanically supports the other two layers. In addition, studies have been conducted on porous metal substrate-supported cells, which include an independent porous metal substrate besides the three layers. For example, PTL 1 describes the above four types of solid oxide electrochemical cells.

To increase the power of a solid oxide electrochemical cell, on the other hand, studies have been conducted on a structure in which protrusions and recesses are formed between a solid hydrogen electrode and a solid electrolyte membrane and between the solid electrolyte membrane and a solid oxygen electrode to increase the interfacial area therebetween. For example, NPL 1 describes a solid oxide electrochemical cell having the above structure, which is termed "mesoscale structure", and a method for fabricating the solid oxide electrochemical cell.

### Citation List

### Patent Literature

PTL 1: Japanese Patent No. 6865993

### Non Patent Literature

NPL 1: Journal of Power Sources, Volume 450, 29 February 2020, 227682, Microextrusion printing for increasing electrode-electrolyte interface in anode-supported solid oxide fuel cells

### Summary of Invention

### Technical Problem

However, for the cells in PTL 1, there is a potential need to dramatically improve the power thereof. In addition, for the cell fabrication method in NPL 2, which meets that potential need, there is a trade-off between the power and productivity and between the productivity and quality of the solid oxide electrochemical cell. Specifically, when a fuel electrode paste is applied to a predetermined rectangular region, decreasing the pitch of the positions where the fuel electrode paste is applied to increase the interfacial area between the solid hydrogen electrode and the solid electrolyte membrane in order to increase the power results in a longer distance over which the fuel electrode paste is applied in the entire rectangular region and therefore results in decreased productivity. On the other hand, increasing the speed at which the fuel electrode paste is applied to prevent a decrease in productivity results in greater difficulty in performing control for moving a fuel electrode paste nozzle to a proper position and control for ejecting a proper amount of fuel electrode paste to that position, which increases concern for decreased quality. Thus, such an attempt to increase the power of the solid oxide electrochemical cell has a problem in that it results in decreased productivity or causes concern for decreased quality.

The present invention has been made in view of the foregoing problem with the conventional art. An object of the present invention is to provide a solid oxide electrochemical cell with high power and a method for producing a solid oxide electrochemical cell by which a solid oxide electrochemical cell with high power can be fabricated in a manner that ensures both high productivity and high quality.

In addition to the above object, another object of the present invention is to provide a method for producing a solid oxide electrochemical cell by which a solid oxide electrochemical cell can be fabricated at a low cost similar to or lower than that in the conventional art.

### Solution to Problem

As a result of intensive research for achieving the above objects, the inventors have first found that protrusions and recesses can be formed in a surface of a flat solid hydrogen electrode by applying a material for the solid hydrogen electrode to a surface with protrusions and recesses of a mold having the surface with protrusions and recesses and then removing the resulting sheet from the mold, instead of applying a paste of the material for the solid hydrogen electrode to a surface of a flat solid hydrogen electrode to form protrusions and recesses.

In addition, the inventors have found that a solid electrolyte membrane and a solid oxygen electrode can be properly stacked in order on a solid hydrogen electrode by adjusting each of the material concentrations for the solid electrolyte membrane and the solid oxygen electrode within a range where the material is not excessively soft or hard, and have also found that a solid oxide electrochemical cell with a high power similar to or higher than that of a cell fabricated by microextrusion printing can be fabricated in a manner that ensures both high productivity and high quality as compared to microextrusion printing, thus leading to the present invention.

Specifically, a first aspect of the present invention provides a solid oxide electrochemical cell including a solid hydrogen electrode that oxidizes hydrogen into water through a reaction with oxygen ions during power generation; a solid electrolyte membrane that is stacked on a first surface of the solid hydrogen electrode and that conducts oxygen ions during power generation; and a solid oxygen electrode that is stacked on a second surface of the solid electrolyte membrane opposite to a surface thereof in contact with the first surface and that reduces oxygen in air into oxygen ions during power generation. The solid hydrogen electrode includes, in the first surface, a plurality of first raised portions raised in a direction toward the solid electrolyte membrane and first intermediate portions each located between two adjacent ones of the plurality of first raised portions. The solid electrolyte membrane includes second raised portions stacked on the first raised portions and second intermediate portions stacked on the first intermediate portions. The solid oxygen electrode includes third raised portions stacked on the second raised portions and third intermediate portions stacked on the second intermediate portions. The first raised portions have a pitch of 70 to 110 um. The second intermediate portions are in contact with the third intermediate portions without a gap therebetween.

Here, in the first aspect, the first raised portions are preferably shaped to extend in a straight line in a direction perpendicular to the direction in which the first raised portions are raised such that each two adjacent ones of the first raised portions are separated by an equal distance.

The thickness of the second raised portions over tops of the first raised portions is preferably smaller than the thickness of the second intermediate portions.

The first raised portions preferably have a height of 50 to 90 um.

In addition, a second aspect of the present invention provides a method for producing a solid oxide electrochemical cell. The method includes the steps of stacking a solid electrolyte membrane that conducts oxygen ions during power generation on a first surface of a solid hydrogen electrode that oxidizes hydrogen into water through a reaction with oxygen ions during power generation; and stacking a solid oxygen electrode that reduces oxygen in air into oxygen ions during power generation on a second surface of the solid electrolyte membrane opposite to a surface thereof in contact with the first surface. The solid hydrogen electrode has a larger thickness than the solid electrolyte membrane and the solid oxygen electrode, has protrusions and recesses in the first surface, and is formed by applying a material for the solid hydrogen electrode to a surface with protrusions and recesses of a silicon substrate having the surface with protrusions and recesses and then removing the resulting sheet from the silicon substrate. The solid oxygen electrode is formed in part by printing or is formed in the entirety thereof by printing with a material having a predetermined material concentration.

Here, in the second aspect, the material concentration for the solid hydrogen electrode is preferably 60 to 75 wt%.

Preferably, the material concentration for the solid electrolyte membrane is 4 to 7 wt%, and the solid electrolyte membrane is formed by performing spray coating with a material for the solid electrolyte membrane on the first surface of the solid hydrogen electrode.

Preferably, the material concentration for the solid oxygen electrode is 4 to 7 wt% for spray coating and is 40 to 75 wt% for printing, and the solid oxygen electrode is formed by performing spray coating and then printing with a material for the solid oxygen electrode on the second surface of the solid electrolyte membrane.

Preferably, the material concentration for the solid oxygen electrode is 40 to 60 wt%, and the solid oxygen electrode is formed in the entirety thereof by printing with a material for the solid oxygen electrode on the second surface of the solid electrolyte membrane.

### Advantageous Effects of Invention

According to the first aspect of the present invention, the solid oxide electrochemical cell can have high power. According to the second aspect of the present invention, a solid oxide electrochemical cell with high power can be fabricated in a manner that ensures both high productivity and high quality.

According to the second aspect of the present invention, in addition to the above advantageous effect, a solid oxide electrochemical cell can be fabricated at a low cost similar to or lower than that in the conventional art.

### Brief Description of Drawings

[Fig. 1(a)] Fig. 1(a) is a sectional view schematically illustrating an example of a solid oxide electrochemical cell according to the present invention.
[Fig. 1(b)] Fig. 1(b) is a sectional view schematically illustrating another example of a solid oxide electrochemical cell according to the present invention.
[Fig. 2] Fig. 2 is a photograph serving as a substitute for a plan view of a solid hydrogen electrode forming the solid oxide electrochemical cell in Fig. 1(a) or 1(b).
[Fig. 3] Fig. 3 is a photograph serving as a substitute for a sectional view of the solid hydrogen electrode in Fig. 2.
[Fig. 4] Fig. 4 is a flowchart illustrating a procedure of fabricating the solid oxide electrochemical cell in Fig. 1(a) or 1(b).
[Fig. 5] Fig. 5 is a photograph serving as a substitute for a partial enlarged sectional view of a solid oxide electrochemical cell A1 (Example 1).
[Fig. 6] Fig. 6 is a graph illustrating the power generation characteristics of the solid oxide electrochemical cell A1.
[Fig. 7] Fig. 7 is a photograph serving as a substitute for a partial enlarged sectional view of a solid oxide electrochemical cell A2 (Example 2).
[Fig. 8] Fig. 8 is a graph illustrating the power generation characteristics of the solid oxide electrochemical cell A2.
[Fig. 9] Fig. 9 is a photograph serving as a substitute for a partial enlarged sectional view of a solid oxide electrochemical cell A3 (Example 3).
[Fig. 10] Fig. 10 is a graph illustrating the power generation characteristics of the solid oxide electrochemical cell A3.
[Fig. 11] Fig. 11 is a photograph serving as a substitute for a partial enlarged sectional view of a solid oxide electrochemical cell B1 (Comparative Example 1).
[Fig. 12] Fig. 12 is a photograph serving as a substitute for a partial enlarged sectional view of a solid oxide electrochemical cell B2 (Comparative Example 2).
[Fig. 13] Fig. 13 is a photograph serving as a substitute for a partial enlarged sectional view of a solid oxide electrochemical cell B3 (Comparative Example 3).
[Fig. 14] Fig. 14 is a photograph serving as a substitute for a partial enlarged sectional view of a solid oxide electrochemical cell B4 (Comparative Example 4).

### Description of Embodiments

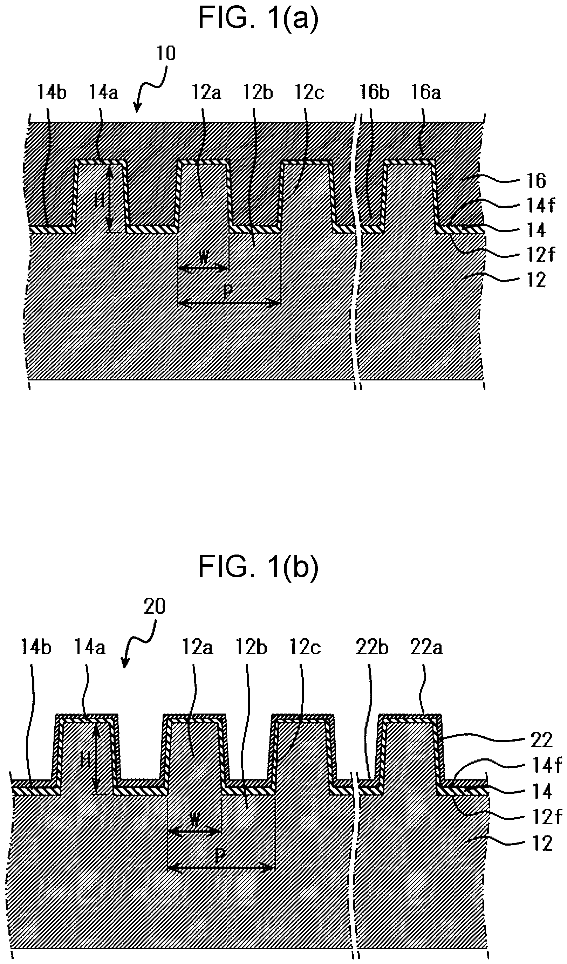

The present invention will hereinafter be described in detail based on preferred embodiments illustrated in the attached drawings. First, solid oxide electrochemical cells according to a first embodiment of the present invention will be described in detail. Fig. 1(a) is a sectional view schematically illustrating an example of a solid oxide electrochemical cell according to the present invention.

A solid oxide electrochemical cell 10 according to the present invention includes a solid hydrogen electrode 12 (also referred to as "fuel electrode", "negative electrode", or "anode layer"), a solid electrolyte membrane 14, and a solid oxygen electrode 16 (also referred to as "air electrode", "positive electrode", or "cathode layer"). The solid hydrogen electrode 12 oxidizes hydrogen into water through a reaction with oxygen ions during power generation. The solid electrolyte membrane 14 is stacked on a first surface 12f of the solid hydrogen electrode 12 and conducts oxygen ions during power generation. The solid oxygen electrode 16 is stacked on a second surface 14f of the solid electrolyte membrane 14 opposite to a surface thereof in contact with the first surface 12f and reduces oxygen in air into oxygen ions during power generation.

The solid hydrogen electrode 12 includes, in the first surface 12f, a plurality of first raised portions 12a and first intermediate portions 12b. The plurality of first raised portions 12a are raised in a direction toward the solid electrolyte membrane 14. The first intermediate portions 12b are each located between two adjacent ones of the plurality of first raised portions 12a. The solid electrolyte membrane 14 includes second raised portions 14a and second intermediate portions 14b. The second raised portions 14a are stacked on the first raised portions 12a. The second intermediate portions 14b are stacked on the first intermediate portions 12b. The solid oxygen electrode 16 includes third raised portions 16a and third intermediate portions 16b. The third raised portions 16a are stacked on the second raised portions 14a. The third intermediate portions 16b are stacked on the second intermediate portions 14b.

The first raised portions 12a have a pitch P of 70 to 110 um. Here, the pitch P of the first raised portions 12a is the center-to-center distance between two adjacent ones of the plurality of first raised portions 12a. If the first raised portions 12a have a pitch P of less than 70 um, the pitch of the first raised portions 12a is excessively small, and the width of the first raised portions 12a is accordingly small, which causes concern that the first raised portions 12a may tear upon removal from a silicon substrate. If the first raised portions 12a have a pitch P of more than 110 um, the pitch of the first raised portions 12a is excessively large, which results in an insufficient increase in power. Although the pitch P of the first raised portions 12a may vary depending on the positions where the first raised portions 12a are formed, the pitch P is preferably constant. It is noted that a cell fabricated by microextrusion printing has raised portions with a pitch of about 200 to 550 um.

The second intermediate portions 14b are in contact with the third intermediate portions 16b without a gap therebetween. If there is a gap between the second intermediate portions 14b and the third intermediate portions 16b, the gap hinders the migration of oxygen ions from the solid oxygen electrode 16 into the solid electrolyte membrane 14 during power generation, which results in an insufficient increase in power.

Because the foregoing configuration increases the interfacial area between the solid hydrogen electrode 12 and the solid electrolyte membrane 14, the solid oxide electrochemical cell according to the present invention can have high power.

Next, the shape of the protrusions and recesses of the solid hydrogen electrode 12 will be described in detail.

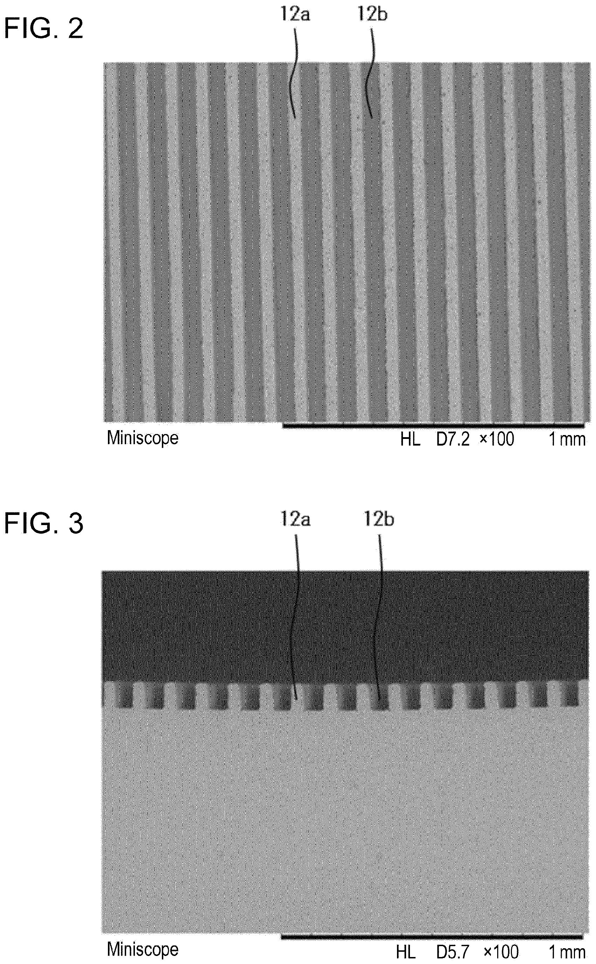

The first raised portions 12a are preferably shaped to extend in a straight line in a direction perpendicular to the direction in which the first raised portions 12a are raised such that each two adjacent ones of the first raised portions 12a are separated by an equal distance. Specifically, the first raised portions 12a forming the protrusions and recesses of the solid hydrogen electrode 12 preferably have, instead of a shape such as a cone, a truncated cone, or a cylinder, a composite shape composed of three segments, that is, a composite shape composed of two segments obtained by cutting a cone, a truncated cone, or a cylinder in a plane including a central axis thereof and a prism disposed in a space by which the two segments are separated from each other at positions where the cut surfaces thereof face each other, with the bases of the prism being defined by the cut surfaces of the two segments. In addition, as an example of the shape of the first raised portions 12a separated by equal distances, Fig. 2 is a photograph serving as a substitute for a plan view of the solid hydrogen electrode forming the solid oxide electrochemical cell in Fig. 1(a) or 1(b), and Fig. 3 is a photograph serving as a substitute for a sectional view of the solid hydrogen electrode in Fig. 2. It is noted that a cell fabricated by microextrusion printing is shaped such that each two adjacent ones of the raised portions of the solid hydrogen electrode are connected at ends thereof without being separated from each other.

Because the foregoing configuration allows the raised portions to be less likely to tear upon removal of the solid hydrogen electrode 12 from a silicon substrate than dot-shaped raised portions, the solid oxide electrochemical cell according to the present invention can be fabricated in a manner that ensures both high productivity and high quality. In addition, because the raised portions can be efficiently formed in a predetermined rectangular region, the solid oxide electrochemical cell according to the present invention can have high power.

Next, the dimensions of the first raised portions 12a of the solid hydrogen electrode 12 will be described in detail.

The first raised portions 12a preferably have a width W of 35 to 55 um and a height H of 50 to 90 um. Here, the width W of the first raised portions 12a is the distance between two lines of intersection made by intersection of two wall surfaces 12c defining each first raised portion 12a with the plane of the first intermediate portions 12b. The height H of the first raised portions 12a is the distance between the tops of the first raised portions 12a and the plane of the first intermediate portions 12b.

If the first raised portions 12a have a width W of less than 35 um, the width of the first raised portions 12a is excessively small, which causes concern that the first raised portions 12a may tear upon removal from a silicon substrate. If the first raised portions 12a have a width W of more than 55 um, the width of the first raised portions 12a is excessively large, and the pitch thereof is accordingly large, which results in an insufficient increase in power.

If the first raised portions 12a have a height H of less than 50 um, the height of the first raised portions 12a is excessively small, and the interfacial area between the solid hydrogen electrode 12 and the solid electrolyte membrane 14 is accordingly small, which results in an insufficient increase in power. If the first raised portions 12a have a height H of more than 90 um, the height of the first raised portions 12a is excessively large, which causes concern that the first raised portions 12a may tear upon removal from a silicon substrate. Although the width W and height H of the first raised portions 12a may vary depending on the positions where the first raised portions 12a are formed, the width W and the height H are preferably constant. It is noted that a cell fabricated by microextrusion printing has raised portions with a width of about 100 to 210 um and a height of about 25 to 40 um.

Because the foregoing configuration allows the formation of protrusions and recesses with a smaller width and a larger height than those of a cell fabricated by microextrusion printing, the solid oxide electrochemical cell according to the present invention can have high power.

Next, the thickness of the solid electrolyte membrane 14 will be described.

The thickness of the second raised portions 14a over the tops of the first raised portions 12a is preferably smaller than the thickness of the second intermediate portions 14b.

Because the foregoing configuration facilitates conduction of oxygen ions during power generation, the solid oxide electrochemical cell according to the present invention can have high power.

Next, the thickness of the solid oxygen electrode 16 will be described in detail. Fig. 1(b) is a sectional view schematically illustrating another example of a solid oxide electrochemical cell according to the present invention.

A solid oxide electrochemical cell 20 according to the present invention has the same configuration as the solid oxide electrochemical cell 10 except that the solid oxide electrochemical cell 20 includes a solid oxygen electrode 22 different from the solid oxygen electrode 16; therefore, a description of the same components is omitted.

The solid oxygen electrode 22 differs only in shape from the solid oxygen electrode 16. Whereas the third intermediate portions 16b have a relatively large thickness and the solid oxygen electrode 16 has a flat top surface, third intermediate portions 22b have a relatively small thickness and the solid oxygen electrode 22 has a non-flat top surface with protrusions and recesses. The solid oxygen electrode 22 includes third raised portions 22a and the third intermediate portions 22b. The third raised portions 22a are stacked on the second raised portions 14a. The third intermediate portions 22b are stacked on the second intermediate portions 14b and preferably have a thickness of 5.0 um or more.

The solid oxide electrochemical cells according to the first embodiment of the present invention are basically configured as described above.

Next, a method for producing a solid oxide electrochemical cell according to a second embodiment of the present invention will be described in detail.

The method for producing a solid oxide electrochemical cell according to the present invention includes the steps of stacking a solid electrolyte membrane 14 on a first surface 12f of a solid hydrogen electrode 12 and stacking a solid oxygen electrode 16 on a second surface 14f of the solid electrolyte membrane 14 opposite to a surface thereof in contact with the first surface 12f. The solid hydrogen electrode 12 oxidizes hydrogen into water through a reaction with oxygen ions during power generation. The solid electrolyte membrane 14 conducts oxygen ions during power generation. The solid oxygen electrode 16 reduces oxygen in air into oxygen ions during power generation.

The solid hydrogen electrode 12 has a larger thickness than the solid electrolyte membrane 14 and the solid oxygen electrode 16 and has protrusions and recesses in the first surface 12f. In addition, the solid hydrogen electrode 12 is formed by applying a material for the solid hydrogen electrode 12 to a surface with protrusions and recesses of a silicon substrate having the surface with protrusions and recesses (tape casting) and then removing the resulting sheet from the silicon substrate. The solid oxygen electrode 16 is formed in part by printing or is formed in the entirety thereof by printing with a material having a predetermined material concentration.

That is, when the solid hydrogen electrode 12 for a fuel electrode-supported cell is formed, a silicon substrate having a surface with protrusions and recesses is used as a mold, and the protrusions and recesses thereof are imprinted to form protrusions and recesses in the surface of the solid hydrogen electrode 12. When the solid oxygen electrode 16 is formed, instead of applying a technique other than printing in the entirety thereof, a combination of printing and a technique other than printing is applied, or printing with a material having a predetermined material concentration is applied in the entirety thereof.

Here, tape casting is a technique that involves continuously feeding a slurry containing a raw material powder onto a carrier film moving relative thereto at constant speed and drying the slurry to obtain a sheet. One such technique is doctor blading. This technique involves moving a blade, called a doctor blade, and an object to be coated relative to each other in a straight direction such that the edge of the doctor blade removes the top of the slurry on the object to be coated, thereby casting the slurry into a tape with constant thickness. In addition, printing is a technique that involves applying a paste containing a raw material powder to an object to be coated and drying the paste to form a film. One such technique is screen printing. This technique involves using a screen so that the thickness is uniform.

Because the foregoing configuration increases the interfacial area between the solid hydrogen electrode 12 and the solid electrolyte membrane 14, the method for producing a solid oxide electrochemical cell according to the present invention allows the resulting solid oxide electrochemical cell to have high power. In addition, because decreasing the pitch of the protrusions and recesses of the silicon substrate does not affect the productivity of a repetitive production process, a solid oxide electrochemical cell can be fabricated in a manner that ensures both high productivity and high quality.

Next, the material for the solid hydrogen electrode 12 will be described in detail.

The material concentration for the solid hydrogen electrode 12 is preferably 60 to 75 wt%. Here, the material for the solid hydrogen electrode 12 includes NiO, YSZ, carbon, Triton X, PVB, PEG 400, and glycerol, with the solvent being ethanol.

If the material concentration for the solid hydrogen electrode 12 is less than 60 wt%, the material has excessively low viscosity and thus flows down during coating, which results in decreased productivity. If the material concentration for the solid hydrogen electrode 12 is more than 75 wt%, the material has excessively high viscosity, which causes concern that the material does not properly enter the recesses of the silicon substrate.

Because the foregoing configuration uses a material with suitable viscosity for coating, the method for producing a solid oxide electrochemical cell according to the present invention can maintain high quality.

Next, the material for the solid electrolyte membrane 14 will be described in detail.

Preferably, the material concentration for the solid electrolyte membrane 14 is 4 to 7 wt%, and the solid electrolyte membrane 14 is formed by performing spray coating with the material for the solid electrolyte membrane 14 on the first surface 12f of the solid hydrogen electrode 12. Here, the material for the solid electrolyte membrane 14 includes YSZ and PVB (B30H), with the solvent being ethanol.

If the material concentration for the solid electrolyte membrane 14 is less than 4 wt%, the material has excessively low viscosity and thus flows down during spray coating, which results in decreased productivity. If the material concentration for the solid electrolyte membrane 14 is more than 7 wt%, the material has excessively high viscosity, which causes concern that the material does not properly enter the first intermediate portions 12b of the solid hydrogen electrode 12. Here, spray coating is a technique that involves uniformly atomizing a pressurized coating liquid into a fine mist through a spray nozzle and spraying and coating a surface of an object to be coated with the mist.

Because the foregoing configuration uses a material with suitable viscosity for spray coating, the method for producing a solid oxide electrochemical cell according to the present invention can maintain high quality.

Next, an example of the material for the solid oxygen electrode 16 will be described in detail.

Preferably, the material concentration for the solid oxygen electrode 16 is 4 to 7 wt% for spray coating and is 40 to 75 wt% for printing, and the solid oxygen electrode 16 is formed by performing spray coating and then printing with the material for the solid oxygen electrode 16 on the second surface 14f of the solid electrolyte membrane 14. Here, the material for the solid oxygen electrode 16 for spray coating includes LSCF and PVB (B30H), with the solvent being ethanol. In addition, the material for the solid oxygen electrode 16 for printing is LSCF, with the solvent being VEH.

If the material concentration for the solid oxygen electrode 16 for spray coating is less than 4 wt%, the material has excessively low viscosity and thus flows down during spray coating, which results in decreased productivity. If the material concentration for the solid oxygen electrode 16 for spray coating is more than 7 wt%, the material has excessively high viscosity, which causes concern that the material does not properly enter the second intermediate portions 14b of the solid electrolyte membrane 14. In addition, if the material concentration for the solid oxygen electrode 16 for printing is less than 40 wt%, the material has excessively low viscosity and thus flows down during printing, which results in decreased productivity. If the material concentration for the solid oxygen electrode 16 for printing is more than 75 wt%, the material has excessively high viscosity, which results in decreased efficiency of printing operations and therefore results in decreased productivity.

Because the foregoing configuration uses a material with suitable viscosity for each of spray coating and printing, the method for producing a solid oxide electrochemical cell according to the present invention can maintain high quality.

Next, another example of the material for the solid oxygen electrode 16 will be described in detail.

Preferably, the material concentration for the solid oxygen electrode 16 is 40 to 60 wt%, and the solid oxygen electrode 16 is formed in the entirety thereof by performing printing with the material for the solid oxygen electrode 16 on the second surface 14f of the solid electrolyte membrane 14. Here, the material for the solid oxygen electrode 16 is LSCF, with the solvent being VEH.

If the material concentration for the solid oxygen electrode 16 is less than 40 wt%, the material has excessively low viscosity and thus flows down during printing, which results in decreased productivity. If the material concentration for the solid oxygen electrode 16 is more than 60 wt%, the material has excessively high viscosity, which causes concern that the material does not properly enter the second intermediate portions 14b of the solid electrolyte membrane 14.

Because the foregoing configuration allows spray coating to be omitted and thus allows the workload required for spray coating to be reduced, the method for producing a solid oxide electrochemical cell according to the present invention can maintain high quality at low cost.

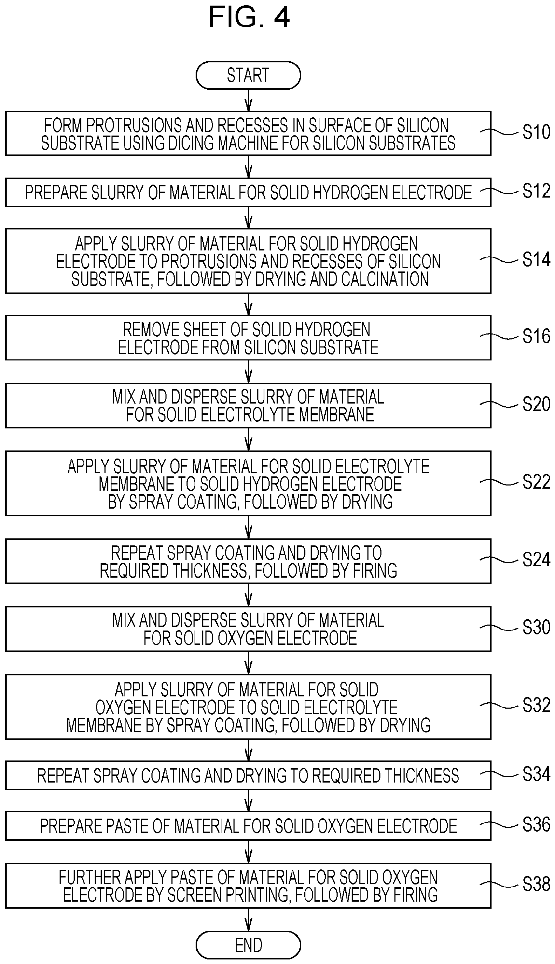

Next, an example of a procedure of fabricating a solid oxide electrochemical cell according to the present invention will be described. Fig. 4 is a flowchart illustrating a procedure of fabricating the solid oxide electrochemical cell in Fig. 1(a) or 1(b).

First, in step S10, protrusions and recesses are formed in a surface of a silicon substrate using a dicing machine for silicon substrates. Next, in step S12, a slurry of the material for the solid hydrogen electrode 12 is prepared. Next, in step S14, the slurry of the material for the solid hydrogen electrode 12 is applied to the protrusions and recesses of the silicon substrate (tape casting), followed by drying and calcination. Next, in step S16, a sheet of the solid hydrogen electrode 12 is removed from the silicon substrate. It is noted that the silicon substrate mold can be repeatedly used for fabrication of the solid hydrogen electrode 12 unless there is any deformation or wear, in which case step S10 can be omitted.

Next, in step S20, a slurry of the material for the solid electrolyte membrane 14 is mixed and dispersed. Next, in step S22, a slurry of the material for the solid electrolyte membrane 14 is applied to the solid hydrogen electrode 12 by spray coating, followed by drying. Next, in step S24, spray coating and drying are repeated to the required thickness, followed by firing.

Next, in step S30, a slurry of the material for the solid oxygen electrode 16 is mixed and dispersed. Next, in step S32, a slurry of the material for the solid oxygen electrode 16 is applied to the solid electrolyte membrane 14 by spray coating, followed by drying. Next, in step S34, spray coating and drying are repeated to the required thickness. Next, in step S36, a paste of the material for the solid oxygen electrode 16 is prepared. Next, in step S38, the paste of the material for the solid oxygen electrode 16 is further applied by printing, followed by firing.

Next, another example of a procedure of fabricating a solid oxide electrochemical cell according to the present invention will be described.

First, steps S10 to S16 and S20 to S24 are performed. Next, steps S36 to S38 are performed, with steps S30 to S34 being omitted. That is, whereas the procedures of forming the solid hydrogen electrode 12 and the solid electrolyte membrane 14 are the same, the solid oxygen electrode 16 is formed by applying printing alone, rather than by applying a combination of spray coating and printing.

The method for producing a solid oxide electrochemical cell according to the second embodiment of the present invention is basically configured as described above.

### EXAMPLES

Next, the present invention will be described in more detail with reference to specific examples of the present invention.

First, as Example 1, a solid oxide electrochemical cell A1 was fabricated by the following procedure.
1. (Step A11) First, grooves were formed in a surface of a silicon substrate using a dicing machine for silicon substrates. A rotary blade with a width of 70 um was used. The target cut width of the rotary blade was 70 um, the target cut depth thereof was 90 um, and the target cut pitch thereof was 160 um. Next, a slurry of a material for the solid hydrogen electrode 12 was prepared using a ball mill. Specifically, 36 g of NiO powder (Sumitomo Metal Mining Co., Ltd.), 24 g of YSZ powder (TZ-8Y, Tosoh Corporation), 10 g of carbon, 1.5 g of Triton X, and 41 g of ethanol were placed in an Iboy container, followed by ball milling for 24 hours. Next, 7.6 g of PVB (B60H), 3.5 g of PEG 400, and 2.5 g of glycerol were added to the Iboy container, followed by ball milling for 24 hours. A slurry of the material for the solid hydrogen electrode 12 was then collected from the Iboy container. Next, the prepared slurry of the material for the solid hydrogen electrode 12 was vacuum-degassed. Next, the degassed slurry was applied to the silicon substrate, was dried, and was calcined at 1150°C for 3 hours, followed by removal from the silicon substrate. Thus, the solid hydrogen electrode 12 was fabricated.
2. (Step A12) First, a slurry of a material for the solid electrolyte membrane 14 was prepared. Specifically, 1 g of YSZ powder, 0.1 g of PVB (B30H), and 18.9 g of ethanol were placed in a cup, followed by dispersion with a disperser for 10 minutes. Next, the dispersed slurry of the material for the solid electrolyte membrane 14 was applied to the solid hydrogen electrode 12 by spray coating and was air-dried. Spray coating and drying were repeated to the required thickness, followed by firing at 1350°C for 5 hours. Thus, the solid electrolyte membrane 14 was fabricated.
3. (Step A13) First, a slurry of a material for the solid oxygen electrode 16 was prepared. Specifically, 1 g of LSCF powder, 0.08 g of PVB (B30H), and 18.92 g of ethanol were placed in a cup, followed by dispersion with a disperser for 10 minutes. Next, the dispersed slurry of the material for the solid oxygen electrode 16 was applied to the solid electrolyte membrane 14 by spray coating and was air-dried. Spray coating and drying were repeated to the required thickness, followed by firing at 900°C for 2 hours. Next, a paste of a material for the solid oxygen electrode 16 was prepared such that the paste contained 65 wt% of LSCF powder and 35 wt% of VEH. Next, the prepared paste of the material for the solid oxygen electrode 16 was printed and fired at 900°C for 2 hours. Thus, the solid oxygen electrode 16 was fabricated.

Next, as Example 2, a solid oxide electrochemical cell A2 was fabricated by the following procedure.
1. (Step A21) The procedure of fabricating the solid hydrogen electrode 12 of the solid oxide electrochemical cell A2 differs from the procedure of fabricating the solid hydrogen electrode 12 of the solid oxide electrochemical cell A1 in that the cut width of the rotary blade for forming grooves in the surface of the silicon substrate was 38 um, the cut depth thereof was 79 um, and the cut pitch thereof was 79 um. The remainder is the same; therefore, a description thereof is omitted.
2. (Step A22) The procedure of fabricating the solid electrolyte membrane 14 of the solid oxide electrochemical cell A2 is the same as the procedure of fabricating the solid electrolyte membrane 14 of the solid oxide electrochemical cell A1; therefore, a description thereof is omitted.
3. (Step A23) The procedure of fabricating the solid oxygen electrode 16 of the solid oxide electrochemical cell A2 differs from the procedure of fabricating the solid oxygen electrode 16 of the solid oxide electrochemical cell A1 in that spray coating was omitted and the paste of the material for the solid oxygen electrode 16 was prepared such that the paste contained 50 wt% of LSCF powder and 50 wt% of VEH. The remainder is the same; therefore, a description thereof is omitted.

Next, as Example 3, a solid oxide electrochemical cell A3 was fabricated by the following procedure.
1. (Step A31) The procedure of fabricating the solid hydrogen electrode 12 of the solid oxide electrochemical cell A3 differs from the procedure of fabricating the solid hydrogen electrode 12 of the solid oxide electrochemical cell A1 in that the cut width of the rotary blade for forming grooves in the surface of the silicon substrate was 30 um, the cut depth thereof was 65 um, and the cut pitch thereof was 93 um. The remainder is the same; therefore, a description thereof is omitted.
2. (Step A32) The procedure of fabricating the solid electrolyte membrane 14 of the solid oxide electrochemical cell A3 is the same as the procedure of fabricating the solid electrolyte membrane 14 of the solid oxide electrochemical cell A1; therefore, a description thereof is omitted.
3. (Step A33) The procedure of fabricating the solid oxygen electrode 16 of the solid oxide electrochemical cell A3 differs from the procedure of fabricating the solid oxygen electrode 16 of the solid oxide electrochemical cell A1 in that spray coating was omitted and the paste of the material for the solid oxygen electrode 16 was prepared such that the paste contained 50 wt% of LSCF powder and 50 wt% of VEH. The remainder is the same; therefore, a description thereof is omitted.

Next, as Comparative Example 1, a solid oxide electrochemical cell B1 was fabricated by the following procedure.
1. (Steps B11 and B12) The procedures of fabricating the solid hydrogen electrode 12 and the solid electrolyte membrane 14 of the solid oxide electrochemical cell B1 are the same as the procedures of fabricating the solid hydrogen electrode 12 and the solid electrolyte membrane 14 of the solid oxide electrochemical cell A1; therefore, a description thereof is omitted.
2. (Step B13) First, a slurry of a material for the solid oxygen electrode 16 was prepared. Specifically, 1 g of LSCF powder, 0.08 g of PVB (B30H), and 18.92 g of ethanol were placed in a cup, followed by dispersion with a disperser for 10 minutes. Next, the dispersed slurry of the material for the solid oxygen electrode 16 was applied to the solid electrolyte membrane 14 by spray coating and was air-dried. Spray coating and drying were repeated 16 times, followed by firing at 900°C for 2 hours. Thus, the solid oxygen electrode 16 was fabricated.

Next, as Comparative Example 2, a solid oxide electrochemical cell B2 was fabricated by the following procedure.
1. (Steps B21 and B22) The procedures of fabricating the solid hydrogen electrode 12 and the solid electrolyte membrane 14 of the solid oxide electrochemical cell B2 are the same as the procedures of fabricating the solid hydrogen electrode 12 and the solid electrolyte membrane 14 of the solid oxide electrochemical cell A1; therefore, a description thereof is omitted.
2. (Step B23) The procedure of fabricating the solid oxygen electrode 16 of the solid oxide electrochemical cell B2 differs from the procedure of fabricating the solid oxygen electrode 16 of the solid oxide electrochemical cell B1 in that spray coating and drying were repeated 24 times. The remainder is the same; therefore, a description thereof is omitted.

Next, as Comparative Example 3, a solid oxide electrochemical cell B3 was fabricated by the following procedure.
1. (Steps B31 and B32) The procedures of fabricating the solid hydrogen electrode 12 and the solid electrolyte membrane 14 of the solid oxide electrochemical cell B3 are the same as the procedures of fabricating the solid hydrogen electrode 12 and the solid electrolyte membrane 14 of the solid oxide electrochemical cell A1; therefore, a description thereof is omitted.
2. (Step B33) The procedure of fabricating the solid oxygen electrode 16 of the solid oxide electrochemical cell B3 differs from the procedure of fabricating the solid oxygen electrode 16 of the solid oxide electrochemical cell B1 in that spray coating and drying were repeated 50 times. The remainder is the same; therefore, a description thereof is omitted.

Next, as Comparative Example 4, a solid oxide electrochemical cell B4 was fabricated by the following procedure.
1. (Steps B41 and B42) The procedures of fabricating the solid hydrogen electrode 12 and the solid electrolyte membrane 14 of the solid oxide electrochemical cell B4 are the same as the procedures of fabricating the solid hydrogen electrode 12 and the solid electrolyte membrane 14 of the solid oxide electrochemical cell A1; therefore, a description thereof is omitted.
2. (Step B43) The procedure of fabricating the solid oxygen electrode 16 of the solid oxide electrochemical cell B4 differs from the procedure of fabricating the solid oxygen electrode 16 of the solid oxide electrochemical cell A1 in that spray coating was omitted. The remainder is the same; therefore, a description thereof is omitted.

Table 1 lists a brief summary of the differences between the methods for fabricating the above solid oxide electrochemical cells.

**[Table 1]**

| | Solid hydrogen electrode 12 | Solid electrolyte membrane 14 | Solid oxygen electrode 16 |
|---|---|---|---|
| Example 1 | Tape casting | Spray coating | Spray coating and printing |
| Example 2 | Same as above | Same as above | Printing (concentration: 50 wt%) |
| Example 3 | Same as above | Same as above | Printing (concentration: 50 wt%) |
| Comparative Example 1 | Same as above | Same as above | Spray coating (repeated 16 times) |
| Comparative Example 2 | Same as above | Same as above | Spray coating (repeated 24 times) |
| Comparative Example 3 | Same as above | Same as above | Spray coating (repeated 50 times) |
| Comparative Example 4 | Same as above | Same as above | Printing (concentration: 65 wt%) |

Next, observation results for the as-fabricated state of the solid oxide electrochemical cells and measurement results for the power generation characteristics thereof will be described in detail.

The microscopic structure of each solid oxide electrochemical cell was observed under an SEM (Miniscope, TM3000). In addition, the OCV and maximum power density of each solid oxide electrochemical cell were measured at 600°C to 800°C by supplying 3% of H₂ and 100 SCCM of H₂O to the solid hydrogen electrode side and 100 SCCM of air to the solid oxygen electrode side. Furthermore, the range of high power, which is an object of the present invention, was set as follows: the OCV is 0.90 V or more, and the maximum power density at 700°C is 0.50 W/cm² or more.

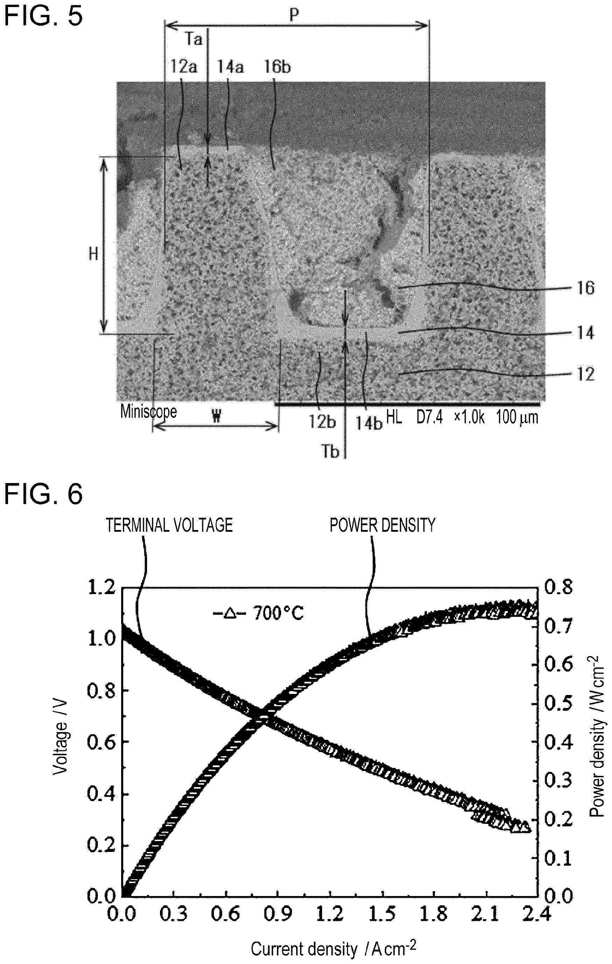

First, Example 1 will be described. Fig. 5 is a photograph serving as a substitute for a partial enlarged sectional view of the solid oxide electrochemical cell A1. Fig. 6 is a graph illustrating the power generation characteristics of the solid oxide electrochemical cell A1.

A usable cell was able to be fabricated without peeling of the solid oxygen electrode 16. In addition, the width W of the first raised portions 12a of the solid hydrogen electrode 12 was about 46 to 48 um, the height H thereof was about 67 to 71 um, and the pitch P thereof was about 99 to 101 um. The thickness Ta of the tops of the second raised portions 14a of the solid electrolyte membrane 14 was about 3 to 4 um, and the thickness Tb of the centers of the second intermediate portions 14b was about 4 to 5 um. Furthermore, the OCV was 1.03 V, and the maximum power density at 700°C was 0.75 W/cm², which are within the range of high power.

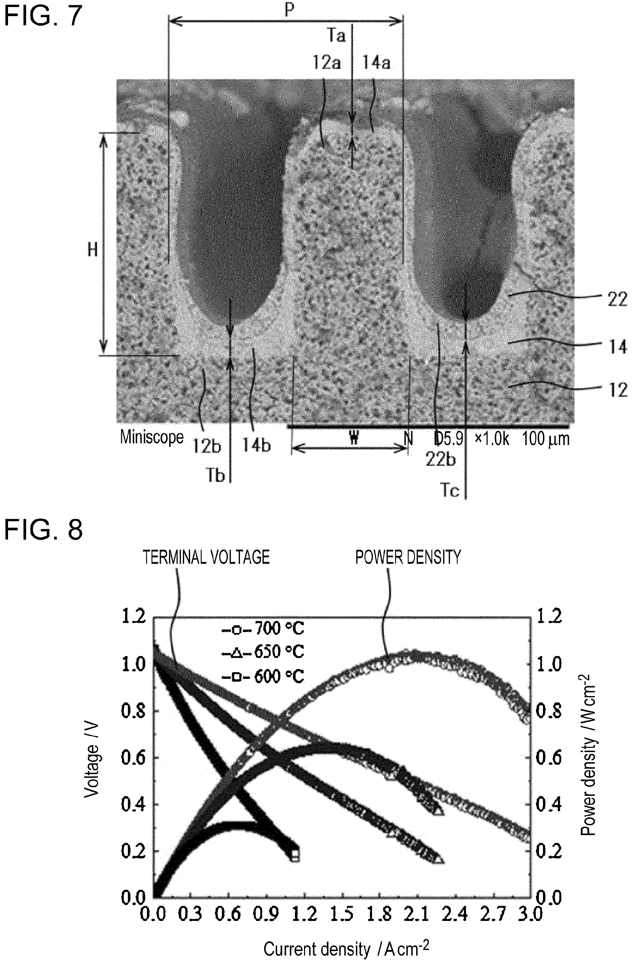

Next, Example 2 will be described. Fig. 7 is a photograph serving as a substitute for a partial enlarged sectional view of the solid oxide electrochemical cell A2. Fig. 8 is a graph illustrating the power generation characteristics of the solid oxide electrochemical cell A2.

A usable cell was able to be fabricated without peeling of the solid oxygen electrode 16. In addition, the width W of the first raised portions 12a of the solid hydrogen electrode 12 was about 40 to 42 um, the height H thereof was about 79 to 81 um, and the pitch P thereof was about 79 to 84 um. The thickness Ta of the tops of the second raised portions 14a of the solid electrolyte membrane 14 was about 2 to 3 um, and the thickness Tb of the centers of the second intermediate portions 14b was about 6 to 7 um. The thickness Tc of the centers of the third intermediate portions 16b of the solid oxygen electrode 16 was about 5 to 6 um. Furthermore, the OCV was 1.05 V, and the maximum power density at 700°C was 1.03 W/cm², which are within the range of high power.

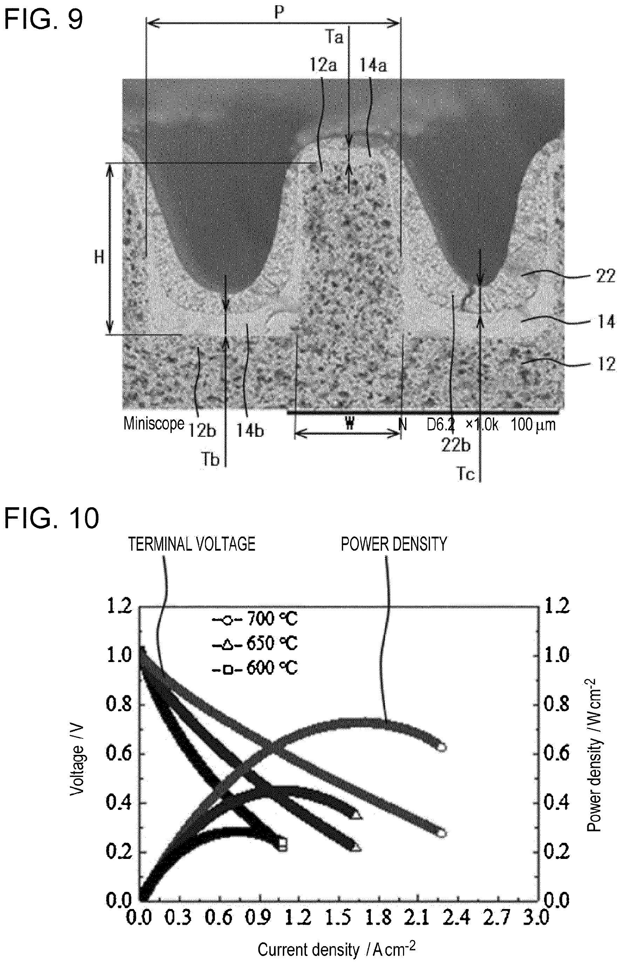

Next, Example 3 will be described. Fig. 9 is a photograph serving as a substitute for a partial enlarged sectional view of the solid oxide electrochemical cell A3. Fig. 10 is a graph illustrating the power generation characteristics of the solid oxide electrochemical cell A3.

A usable cell was able to be fabricated without peeling of the solid oxygen electrode 16. In addition, the width W of the first raised portions 12a of the solid hydrogen electrode 12 was about 39 to 40 um, the height H thereof was about 64 to 65 um, and the pitch P thereof was about 93 to 96 um. The thickness Ta of the tops of the second raised portions 14a of the solid electrolyte membrane 14 was about 4 to 6 um, and the thickness Tb of the centers of the second intermediate portions 14b was about 8 to 9 um. The thickness Tc of the centers of the third intermediate portions 16b of the solid oxygen electrode 16 was about 10 to 11 um. Furthermore, the OCV was 1.00 V, and the maximum power density at 700°C was 0.73 W/cm², which are within the range of high power.

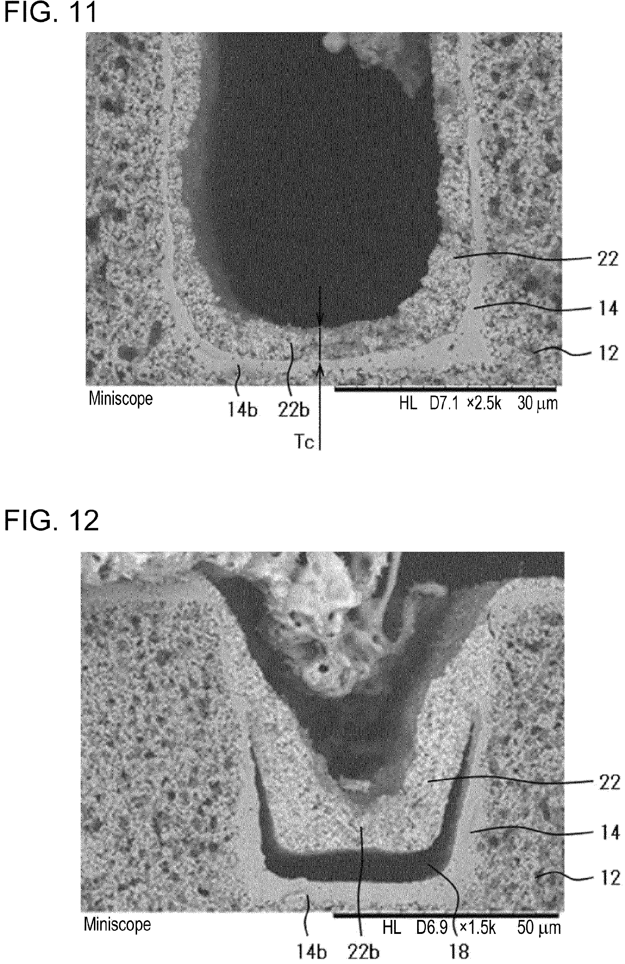

Next, observation results for the as-fabricated state of the comparative examples will be described in detail. First, Comparative Example 1 will be described. Fig. 11 is a photograph serving as a substitute for a partial enlarged sectional view of the solid oxide electrochemical cell B1.

A usable cell was able to be fabricated without cleavage or peeling of the solid oxygen electrode 16. In addition, the thickness Tc of the centers of the third intermediate portions 16b of the solid oxygen electrode 16 was about 4 to 5 um. However, the productivity was low since spray coating and drying were repeated 16 times. Thus, the power generation characteristics were not measured.

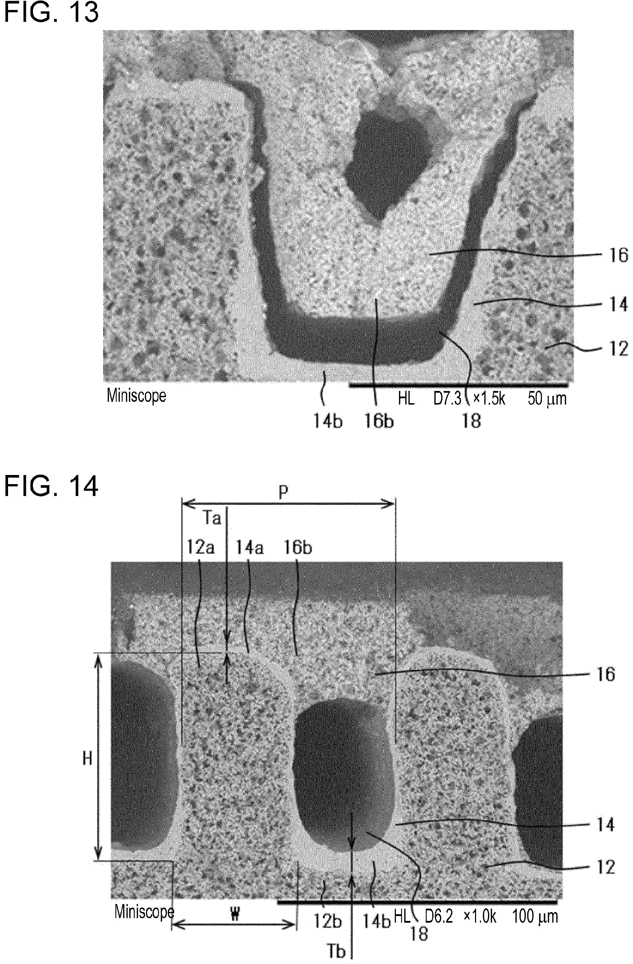

Next, Comparative Examples 2 and 3 will be described. Fig. 12 is a photograph serving as a substitute for a partial enlarged sectional view of the solid oxide electrochemical cell B2. Fig. 13 is a photograph serving as a substitute for a partial enlarged sectional view of the solid oxide electrochemical cell B3.

No usable cell was able to be fabricated since the solid oxygen electrode 16 peeled and a gap 18 formed between the second intermediate portions 14b and the third intermediate portions 16b. Thus, the power generation characteristics were not measured.

Next, Comparative Example 4 will be described. Fig. 14 is a photograph serving as a substitute for a partial enlarged sectional view of the solid oxide electrochemical cell B4.

Although the solid oxygen electrode 16 did not cleave or peel, no usable cell was able to be fabricated since a large cavity, namely, a gap 18, formed between the second intermediate portions 14b and the third intermediate portions 16b. In addition, the width W of the first raised portions 12a of the solid hydrogen electrode 12 was about 40 to 45 µm, the height H thereof was about 75 to 79 um, and the pitch P thereof was about 76 to 80 um. The thickness Ta of the tops of the second raised portions 14a of the solid electrolyte membrane 14 was about 2 to 3 µm, and the thickness Tb of the centers of the second intermediate portions 14b was about 6 to 8 µm. Furthermore, the OCV was 0.98 V, which is within the range of high power. However, the maximum power density at 700°C was 0.45 W/cm², which is outside the range of high power.

Table 2 lists a brief summary of the observation results for the as-fabricated state of the above solid oxide electrochemical cells and the measurement results for the power generation characteristics thereof. Table 3 lists a summary of the measurement results for each dimension.

**[Table 2]**

| | Cell | Figure | Observation results | OCV | Maximum power density |
|---|---|---|---|---|---|
| Example 1 | Cell A1 | Figs. 5 and 6 | Good | Good: 1.03 V | Good: 0.75 W/cm² |
| Example 2 | Cell A2 | Figs. 7 and 8 | Good | Good: 1.05 V | Good: 1.03 W/cm² |
| Example 3 | Cell A3 | Figs. 9 and 10 | Good | Good: 1.00 V | Good: 0.73 W/cm² |
| Comparative Example 1 | Cell B1 | Fig. 11 | Good | Not measured | Not measured |
| Comparative Example 2 | Cell B2 | Fig. 12 | Poor: peeled | Not measured | Not measured |
| Comparative Example 3 | Cell B3 | Fig. 13 | Poor: peeled | Not measured | Not measured |
| Comparative Example 4 | Cell B4 | Fig. 14 | Poor: cavity | Good: 0.98 V | Poor: 0.45 W/cm² |

**[Table 3]**

| | First raised portions 12a | | | Second raised portions 14a | Second intermediate portions 14b | Third intermediate portions 16b |
|---|---|---|---|---|---|---|
| | Width W | Height H | Pitch P | Thickness Ta | Thickness Tb | Thickness Tc |
| Example 1 | 46-48 µm | 67-71 µm | 99-101 µm | 3-4 µm | 4-5 µm | Not measured |
| Example 2 | 40-42 µm | 79-81 µm | 79-84 µm | 2-3 µm | 6-7 µm | 5-6 µm |
| Example 3 | 39-40 µm | 64-65 µm | 93-96 µm | 4-6 µm | 8-9 µm | 10-11 µm |
| Comparative Example 1 | Not measurable | Not measurable | Not measurable | Not measurable | Not measured | 4-5 µm |
| Comparative Example 2 | Not measurable | Not measured | Not measurable | Not measured | Not measured | Not measured |
| Comparative Example 3 | Not measurable | Not measurable | Not measurable | Not measured | Not measurable | Not measured |
| Comparative Example 4 | 40-45 µm | 75-79 µm | 76-80 µm | 2-3 µm | 6-8 µm | Not measured |

As is obvious from these results, solid oxide electrochemical cells configured in the same manner as the solid oxide electrochemical cells A1 to A3 of Examples 1 to 3 and the solid oxide electrochemical cell B1 of Comparative Example 1 can have high power. In addition, as is obvious from the results, solid oxide electrochemical cells configured in the same manner as the solid oxide electrochemical cells A1 to A3 of Examples 1 to 3 can have high power and can be fabricated in a manner that ensures both high productivity and high quality.

Although solid oxide electrochemical cells according to the present invention have been described in detail above with reference to Examples 1 to 3, the present invention is not limited to the above description. It should be understood that various improvements and modifications can be made without departing from the spirit of the present invention.

### Industrial Applicability

A solid oxide electrochemical cell according to the present invention can have high power, and a method for producing the solid oxide electrochemical cell has the advantageous effect that a solid oxide electrochemical cell with high power can be fabricated in a manner that ensures both high productivity and high quality and also has the advantageous effect that a solid oxide electrochemical cell can be fabricated at a low cost similar to or lower than that in the conventional art, thus being industrially useful.

### Reference Signs List

10, 20 solid oxide electrochemical cell
12 solid hydrogen electrode
12a first raised portion
12b first intermediate portion
12c wall surface
12f first surface
14 solid electrolyte membrane
14a second raised portion
14b second intermediate portion
14f second surface
16, 22 solid oxygen electrode
16a, 22a third raised portion
16b, 22b third intermediate portion
18 gap

## Claims

1. A solid oxide electrochemical cell comprising:
a solid hydrogen electrode that oxidizes hydrogen into water through a reaction with oxygen ions during power generation;
a solid electrolyte membrane that is stacked on a first surface of the solid hydrogen electrode and that conducts oxygen ions during power generation; and
a solid oxygen electrode that is stacked on a second surface of the solid electrolyte membrane opposite to a surface thereof in contact with the first surface and that reduces oxygen in air into oxygen ions during power generation,
wherein the solid hydrogen electrode includes, in the first surface, a plurality of first raised portions raised in a direction toward the solid electrolyte membrane and first intermediate portions each located between two adjacent ones of the plurality of first raised portions,
the solid electrolyte membrane includes second raised portions stacked on the first raised portions and second intermediate portions stacked on the first intermediate portions,
the solid oxygen electrode includes third raised portions stacked on the second raised portions and third intermediate portions stacked on the second intermediate portions,
the first raised portions have a pitch of 70 to 110 um, and
the second intermediate portions are in contact with the third intermediate portions without a gap therebetween.

2. The solid oxide electrochemical cell according to Claim 1, wherein the first raised portions are shaped to extend in a straight line in a direction perpendicular to the direction in which the first raised portions are raised such that each two adjacent ones of the first raised portions are separated by an equal distance.

3. The solid oxide electrochemical cell according to Claim 1 or 2, wherein a thickness of the second raised portions over tops of the first raised portions is smaller than a thickness of the second intermediate portions.

4. The solid oxide electrochemical cell according to Claim 1 or 2, wherein the first raised portions have a height of 50 to 90 um.

5. A method for producing a solid oxide electrochemical cell, comprising the steps of:
stacking a solid electrolyte membrane that conducts oxygen ions during power generation on a first surface of a solid hydrogen electrode that oxidizes hydrogen into water through a reaction with oxygen ions during power generation; and
stacking a solid oxygen electrode that reduces oxygen in air into oxygen ions during power generation on a second surface of the solid electrolyte membrane opposite to a surface thereof in contact with the first surface,
wherein the solid hydrogen electrode has a larger thickness than the solid electrolyte membrane and the solid oxygen electrode, has protrusions and recesses in the first surface, and is formed by applying a material for the solid hydrogen electrode to a surface with protrusions and recesses of a silicon substrate having the surface with protrusions and recesses and then removing a resulting sheet from the silicon substrate, and
the solid oxygen electrode is formed in part by printing or is formed in the entirety thereof by printing with a material having a predetermined material concentration.

6. The method for producing a solid oxide electrochemical cell according to Claim 5, wherein a material concentration for the solid hydrogen electrode is 60 to 75 wt%.

7. The method for producing a solid oxide electrochemical cell according to Claim 5 or 6, wherein
a material concentration for the solid electrolyte membrane is 4 to 7 wt%, and
the solid electrolyte membrane is formed by performing spray coating with a material for the solid electrolyte membrane on the first surface of the solid hydrogen electrode.

8. The method for producing a solid oxide electrochemical cell according to Claim 5 or 6, wherein
a material concentration for the solid oxygen electrode is 4 to 7 wt% for spray coating and is 40 to 75 wt% for printing, and
the solid oxygen electrode is formed by performing spray coating and then printing with a material for the solid oxygen electrode on the second surface of the solid electrolyte membrane.

9. The method for producing a solid oxide electrochemical cell according to Claim 5 or 6, wherein
a material concentration for the solid oxygen electrode is 40 to 60 wt%, and
the solid oxygen electrode is formed in the entirety thereof by printing with a material for the solid oxygen electrode on the second surface of the solid electrolyte membrane.
